# EUROPÄISCHE PATENTSCHRIFT

(11) **EP 2 173 598 B1**
(45) Veröffentlichungstag und Bekanntmachung des Hinweises auf die Patenterteilung: **01.06.2011**
(21) Anmeldenummer: 08785998.9
(22) Anmeldetag: 09.07.2008
(51) Int. Cl.: B62D 1/06

(54) **VERFAHREN ZUR BESCHICHTUNG EINES LENKRADES UND ENTSPRECHENDES LENKRAD**
METHOD FOR COATING A STEERING WHEEL AND CORRESPONDING STEERING WHEEL
PROCÉDÉ DE REVÊTEMENT D'UN VOLANT ET VOLANT CORRESPONDANT

(30) Priorität: 02.08.2007 DE 102007036802
(43) Veröffentlichungstag der Anmeldung: 14.04.2010
(73) Patentinhaber: Takata-Petri AG, 63743 Aschaffenburg (DE)
(72) Erfinder: MÜLLER, Norbert, 63743 Aschaffenburg (DE); HAART, Christian, 63785 Obernburg (DE); SAUER, Martin, 63768 Hösbach (DE); KOLB, Jürgen, 63743 Aschaffenburg (DE); HENNING, Daniel, 63741 Aschaffenburg (DE); SCHLECHTER, Albert, 63839 Kleinwallstadt (DE); YANGINCI, Abdullah, 63741 Aschaffenburg (DE)
(74) Vertreter: Baumgärtel, Gunnar
(86) Internationale Anmeldenummer: PCT/EP2008/058888
(87) Internationale Veröffentlichungsnummer: WO 2009/016007

(56) Entgegenhaltungen:
- EP-A- 1 914 148
- DE-A1- 2 716 449
- DE-U- 7 244 584
- DE-U- 7 301 718
- DE-U1-202004 015 234
- US-B1- 6 386 064

## Beschreibung

Die Erfindung betrifft ein Verfahren zur Beschichtung eines Lenkrades nach dem Oberbegriff des Anspruchs1 und entsprechendes Lenkrad nach dem Oberbegriff des Anspruchs 6.

Lenkräder weisen in der Regel ein Lenkradskelett mit einem ringförmigen Lenkradkranz auf, der von einer Schaumstoffschicht umgeben ist. Auf diese Schaumschicht wird eine Deckschicht aufgebracht, die aus Kunststoff oder Leder besteht.

Aus den Druckschriften US 6 386 064 B1 und DE 20 2004 015234 U1 sind Lenkräder bekannt, bei denen einzelne Abschnitte des Lenkrades mit Leder ummantelt sind. Hierzu werden Lederstreifen auf die Schaumstoffschicht des Lenkrades aufgelegt und die Seitenkanten werden anschließend miteinander verbunden.

Aus der gattungsbildenden Druckschrift DE 73 01718 U ist eine Lenkradhülle für die komplette Umhüllung eines Lenkrades bekannt, bei der auf der Anlagefläche der Deckschicht aus Leder oder Kunststoff vor der Befestigung am Lenkrad eine Polsterung angebracht wird. Dadurch soll verhindert werden, dass sich die Polsterung beim Aufbringen der Deckschicht auf das Lenkrad verschiebt.

Dieses Aufbringen der Deckschicht, nachfolgend Belederung genannt, erfolgt bisher ausschließlich in Handarbeit. Dabei wird ein Leder- oder Kunststoffstreifen zunächst entsprechend der Ringform des Lenkradkranzes zu einem Ring zusammengefügt. Dieser Ring wird auf den Lenkradkranz aufgezogen. Anschließend wird die Schaumstoffschicht des Lenkradkranzes mit einem Kleber versehen, mit dem die Deckschicht dann auf der Schaumstoffschicht befestigt wird. In einem weiteren Arbeitsgang werden die seitlichen Kanten des Ringes von Hand miteinander vernäht.

Diese Verfahrensweise hat den Nachteil, dass sich der ringförmige Streifen der Deckschicht nur schwer auf dem Lenkradkranz positionieren lässt, da dieser Vorgang ausschließlich manuell erfolgen kann.

Der Erfindung liegt die Aufgabe zugrunde, die Belederung so zu verändern, dass sie zumindest zum Teil mittels einer Vorrichtung erfolgen kann, d.h., dass der Vorgang zumindest teilweise automatisierbar ist.

Erfindungsgemäß wird das gemäß den Merkmalen des Anspruchs 1 erreicht.

Bei einem Verfahren zur Beschichtung eines Lenkrades mit einem Lenkradkranz, der ein Lenkradskelett mit einer aufgebrachten Schaumstoffschicht aufweist, die mit einer aus Leder oder Kunststoff bestehenden Deckschicht umgeben werden soll, wird erfindungsgemäß die Deckschicht als Streifen auf dem Lenkradkranz positioniert und nur mit einem Ende an der Schaumstoffschicht fixiert. Anschließend wird der Deckschichtstreifen dann auf die Schaumstoffschicht aufgeklebt und die Seitenkanten des Deckschichtstreifens werden in bekannter Weise miteinander vernäht.

Bei diesem Verfahren wird also der Deckschichtstreifen vor dem Aufbringen auf die Schaumstoffschicht nicht zu einem Ring zusammengefügt. Dadurch lässt sich der Streifen mittels einer Vorrichtung auf dem Lenkradkranz positionieren, wodurch der Belederungsprozess wesentlich günstiger als bisher durchzuführen ist. Weiterhin ist es leichter möglich, Leder mit unterschiedlicher Dehnung, d.h., von minderer Qualität zu verwenden, wobei die Optik und die Qualität der so belederten Lenkräder dem Stand der bisher von Hand belederten Lenkräder entspricht.

Es ist zweckmäßig, dass der Deckschichtstreifen in einen Formschieber eingesetzt wird, dass der Lenkradkranz drehbar gelagert wird und dass zur Verbindung des Lenkradkranzes mit dem Deckschichtstreifen der Formschieber und der Lenkradkranz relativ zueinander verschoben werden, wobei das Lenkrad gleichzeitig gedreht wird. Dadurch ist eine genaue Positionierung des Deckschichtstreifens gegenüber dem Lenkradkranz gewährleistet.

Bei dieser Verfahrensweise ist es sinnvoll Kleber schon vor dem Auflegen des Deckschichtstreifens auf die Schaumstoffschicht des Lenkradkranzes aufzubringen. Das wird möglich, da der Deckschichtstreifen wegen der Verwendung einer Vorrichtung von Anfang an richtig positioniert ist und ein Nachjustieren nicht erforderlich ist. Es ist zweckmäßig, dass die Schaumstoffschicht vor dem Aufbringen des Deckschichtstreifens mit doppelseitigem Klebeband versehen wird. Das Klebeband wird vorzugsweise auf die Außenseite des Lenkradkranzes aufgebracht, d.h., dort, wo der Lenkradkranz seinen größten Durchmesser aufweist.

Weiterhin ist es zweckmäßig, dass der Deckschichtstreifen nach der Positionierung auf dem Lenkradkranz mit einem Ende in einer quer zum Lenkradkranz in der Schaumstoffschicht verlaufenden Nut fixiert wird und dass das andere Ende des Streifens nach seiner Fixierung auf der Schaumstoffschicht ebenfalls in dieser Nut fixiert wird.

Bei Verwendung eines Deckschichtstreifens, der in Längsrichtung aus mehreren Teilen zusammengesetzt ist, werden diese Teile nach dem Ausstanzen, d.h. bereits vor dem Aufbringen auf das Lenkradskelett, gesteppt und zum Deckschichtstreifen zusammengenäht.

Dieses Produktionsverfahren zur Belederung eines Lenkrades ist wesentlich schneller als die bisherigen Belederungsverfahren und damit auch kostengünstiger.

Bei einem Lenkrad mit einem Lenkradkranz, der ein Lenkradskelett mit einer aufgebrachten Schaumstoffschicht aufweist, die von einer aus Leder oder Kunststoff bestehenden Deckschicht umgeben ist und insbesondere nach dem vorgenannten Verfahren herzustellen ist, besteht die Deckschicht aus einem mittels einer Vorrichtung auf der Schaumstoffschicht positionierbaren Streifen, dessen Enden vor seiner Befestigung auf der Schaumstoffschicht voneinander getrennt sind. Die Schaumstoffschicht weist für die Fixierung beider Enden des Deckschichtstreifens vorzugsweise eine quer zum Lenkradkranz verlaufende Nut auf. In einer weiteren Ausgestaltung ist in der Nut mindestens ein federnder Clip für die Fixierung beider Enden des Deckschichtstreifens vorgesehen. Der Clip besteht vorzugsweise aus Federstahl.

Die Erfindung soll in einem Ausführungsbeispiel anhand von Zeichnungen erläutert werden. Es zeigen:
- Fig. 1: schematisch die Zuordnung der Vorrichtung zur Belederung des Lenkradkranzes;
- Fig. 2: einen vergrößerten Schnitt durch den Formschieber nach Fig. 1;
- Fig. 3: einen vergrößerten Längsschnitt durch einen Abschnitt des Lenkradkranzes.

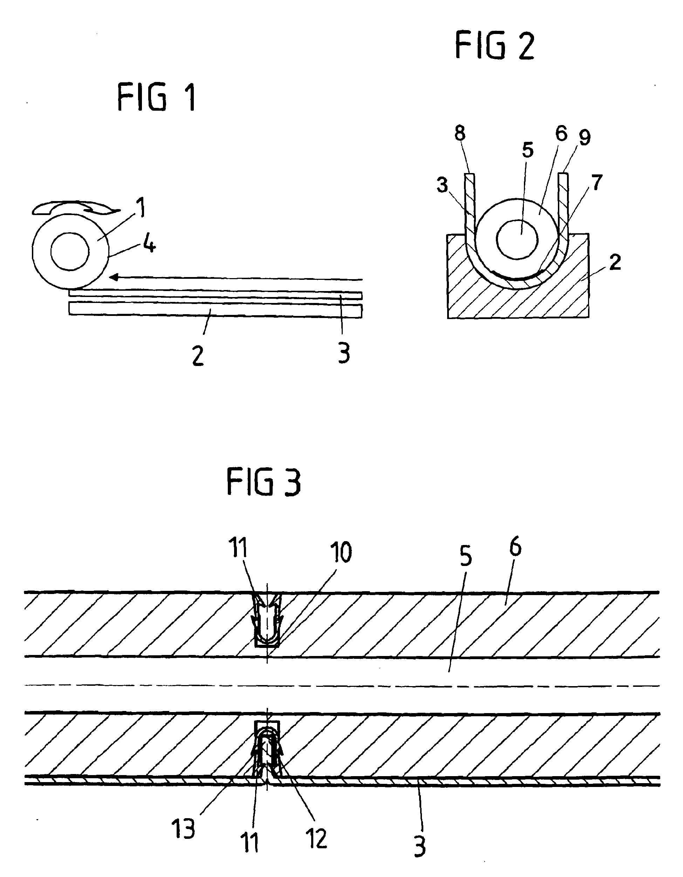

In der Fig. 1 ist schematisch ein Lenkrad 1 dargestellt, dessen Lenkradkranz beledert werden soll. Das Lenkrad 1 ist in einer nicht dargestellten Vorrichtung so gelagert, dass es um seine Achse drehbar ist. Dem Lenkrad 1 ist ein Formschieber 2 zugeordnet, auf dem ein Deckschichtstreifen 3 positioniert worden ist. Wie aus der Fig. 2 ersichtlich ist, liegt der Deckschichtstreifen 3 im Formschieber 2 bereits in vorgeformter Lage. Das Lenkrad ist auf der Außenseite 4 des Lenkradkranzes mit einem doppelseitigen Klebeband 7 versehen worden.

Wie aus der Fig. 3 ersichtlich ist, weist der Lenkradkranz auf einem Lenkradskelett 5 eine Schaumstoffschicht 6 auf. In dieser ist eine quer zum Lenkradkranz verlaufende umlaufende Nut 10 vorgesehen, in der mehrere federnde Clips 11 angeordnet sind.

Die Beschichtung des Lenkradkranzes mit dem Deckschichtstreifen 3 erfolgt nun in der Weise, dass ein Ende 12 des Deckschichtstreifens 3 im Clip 11 eingespannt wird. Danach wird das Lenkrad 1 in Richtung des oberen gebogenen Pfeils (Fig.1) gedreht und gleichzeitig wird der Formschieber 2 in Richtung des linearen Pfeils (Fig.1) bewegt bis der Deckschichtstreifen 3 komplett auf der Schaumstoffschicht 6 des Lenkradkranzes befestigt ist. Wegen der Vorformung des Deckschichtstreifens 3 liegt dieser bereits auf etwa der Hälfte der Schaumstoffschicht 6 an dieser an. Anschließend wird das andere freie Ende 13 des Deckschichtstreifens ebenfalls im Clip 11 befestigt.

Die Belederung wird dadurch abgeschlossen, dass der Deckschichtstreifen komplett um die Schaumstoffschicht gelegt wird und dass die Seitenkanten 8, 9 in üblicher Weise von Hand miteinander vernäht werden.

## Patentansprüche

1. Verfahren zur Beschichtung eines Lenkrades (1), mit einem Lenkradkranz, der ein Lenkradskelett (5) mit einer aufgebrachten Schaumstoffschicht (6) aufweist, die komplett mit einer aus Leder oder Kunststoff bestehenden Deckschicht umgeben werden soll, **dadurch gekennzeichnet, dass** die Deckschicht als Streifen (3) auf dem Lenkradkranz positioniert und mit einem Ende an der Schaumstoffschicht (6) fixiert wird, dass der Deckschichtstreifen (3) dann auf die Schaumstoffschicht (6) aufgeklebt wird und dass die Seitenkanten (8, 9) des Deckschichtstreifens (3) in bekannter Weise miteinander vernäht werden, wobei der Deckschichtstreifen (3) in einen Formschieber (2) eingesetzt wird, der Lenkradkranz drehbar gelagert wird und zur Verbindung des Lenkradkranzes mit dem Deckschichtstreifen (3) der Formschieber (2) und der Lenkradkranz relativ zueinander verschoben werden, wobei das Lenkrad (1) gleichzeitig gedreht wird.

2. Verfahren nach Anspruch 1, **dadurch gekennzeichnet, dass** die Schaumstoffschicht (6) vor dem Aufbringen des Deckschichtstreifens (3) mit doppelseitigem Klebeband (7) versehen wird.

3. Verfahren nach Anspruch 2, **dadurch gekennzeichnet, dass** das doppelseitige Klebeband (7) auf die Außenseite (4) des Lenkradkranzes aufgebracht wird.

4. Verfahren nach mindestens einem der vorhergehenden Ansprüche, **dadurch gekennzeichnet, dass** der Deckschichtstreifen (3) nach der Positionierung auf dem Lenkradkranz mit einem Ende (12) in einer quer zum Lenkradkranz in der Schaumstoffschicht (6) verlaufenden Nut (10) fixiert wird und dass das andere Ende (13) des Streifens (3) nach seiner Fixierung auf der Schaumstoffschicht (6) ebenfalls in der Nut fixiert wird.

5. Verfahren nach mindestens einem der vorhergehenden Ansprüche, **dadurch gekennzeichnet, dass** bei Verwendung eines Deckschichtstreifens, der in Längsrichtung aus mehreren Teilen zusammengesetzt ist, diese Teile nach dem Ausstanzen gesteppt und zum Deckschichtstreifen (3) zusammengenäht werden.

6. Lenkrad (1) mit einem Lenkradkranz, der ein Lenkradskelett (5) mit einer aufgebrachten Schaumstoffschicht (6) aufweist, die von einer aus Leder oder Kunststoff bestehenden Deckschicht umgeben ist, insbesondere hersgestellt nach einen Verfahren nach mindestens einem der Ansprüche 1 bis 5, **dadurch gekennzeichnet, dass** die Deckschicht aus einem mittels einer Vorrichtung auf der Schaumstoffschicht (6) positionierbaren Streifen (3) besteht, dessen Enden (12, 13) vor seiner Befestigung auf der Schaumstoffschicht (6) voneinander getrennt sind, dass die Schaumstoffschicht (6) für die Fixierung beider Enden (12, 13) des Deckschichtstreifens (3) eine quer zum Lenkradkranz (5, 6) verlaufende Nut (10) aufweist, und dass in der Nut (10) mindestens ein federnder Clip(11) für die Fixierung beider Enden (12, 13) des Deckschichtstreifens (3) vorgesehen ist.

7. Lenkrad nach Anspruch 6, **dadurch gekennzeichnet, dass** der Clip (11) aus Federstahl besteht.

## Claims

1. Method for coating a steering wheel (1) having a steering wheel rim comprising a steering wheel skeleton (5) with an applied foam layer (6) and intended to be encompassed by a cover layer made of leather or plastic, **characterized in that** the cover layer is positioned as a strip (3) on the steering wheel rim and is fixed to the foam layer (6) on one end, that the cover layer strip (3) is then glued onto the foam layer (6) and that the lateral edges (8, 9) of the cover layer strip (3) are sewed together in a known manner, wherein the cover layer strip (3) is inserted into a slide (2), the steering wheel rim is pivoted and the slide (2) and the steering wheel rim are relatively moved to each other for connecting the steering wheel rim with the cover layer strip (3), whereby the steering wheel (1) is simultaneously rotated .

2. Method according to claim 1, **characterized in that** the foam layer (6) is provided with a double sided adhesive tape (7) before applying the cover layer strip (3).

3. Method according to claim 2, **characterized in that** the double sided adhesive tape (7) is applied onto the outer side (4) of the steering wheel rim.

4. Method according to at least one of the preceding claims, **characterized in that** the cover layer strip (3) is fixed after the positioning on the steering wheel rim with one end (12) in a groove (10) continuing crosswise to the steering wheel rim in the foam layer (6) and the other end (13) of the strip (3) is also fixed in the groove after its fixation on the foam layer (6).

5. Method according to one of the preceding claims, **characterized in that** in case of using a cover layer strip composed of multiple parts in longitudinal direction these parts are stitched after punching out and are sewed to the cover layer strip (3).

6. Steering wheel (1) with a steering wheel rim having a steering wheel skeleton (5) with an applied foam layer (6) which is encompassed by a cover layer made of leather or plastic, in particular made according to a method according to at least one of the claims 1 to 5, **characterized in that** the cover layer comprises a strip (3) positionable on the foam layer (6) by the means of a device whereby its ends (12, 13) are being separated from each other before its attachment to the foam layer (6), that the foam layer (6) has a groove continuing crosswise to the steering wheel rim (5, 6) for the attachment of both ends (12, 13) of the cover layer strip (3), and that in the groove (10) at least one spring clip (11) is provided for the attachment of both ends (12, 13) of the cover layer strip (3).

7. Steering wheel according to claim 6, **characterized in that** the clip (11) is made of spring steel.

## Revendications

1. Procédé pour le revêtement d'un volant (1), avec une couronne de volant, qui comprend une armature de volant (5) avec une couche de mousse (6) rapportée, qui est destinée à être entourée complètement d'une couche de couverture constituée en cuir ou en matière plastique, **caractérisé en ce que** la couche de couverture est positionnée sur la couronne de volant sous forme de bande (3) et est fixée par une extrémité sur la couche de mousse (6), **en ce que** la bande (3) de couche de couverture est alors collée sur la couche de mousse (6), et **en ce que** les arêtes latérales (8, 9) de la bande (3) de couche de couverture sont cousues de façon connue l'une avec l'autre, dans lequel la bande (3) de couche de couverture est mise en place dans un coulisseau de mise en forme (2), la couronne de volant est montée rotative et pour la liaison de la couronne de volant avec la bande (3) de couche de couverture, le coulisseau de mise en forme (2) et la couronne de volant sont déplacés l'un par rapport à l'autre, le volant (1) étant simultanément tourné.

2. Procédé selon la revendication 1, **caractérisé en ce que** la couche de mousse (6) est dotée d'un ruban autocollant biface (7) avant l'application de la bande (3) de couche de couverture.

3. Procédé selon la revendication 2, **caractérisé en ce que** le ruban autocollant biface (7) est appliqué sur la face extérieure (4) de la couronne de volant.

4. Procédé selon l'une au moins des revendications précédentes, **caractérisé en ce que** la bande (3) de couche de couverture est fixée, après le positionnement sur la couronne de volant, avec une extrémité (12) dans une rainure (10) qui s'étend dans la couche de mousse (6) transversalement à la couronne de volant, est **en ce que** l'autre extrémité (13) de la bande (3) est également fixée dans la rainure après sa fixation sur la couche (6) de mousse.

5. Procédé selon l'une au moins des revendications précédentes, **caractérisée en ce que** lorsqu'on utilise une bande de couche de couverture qui est composée de plusieurs pièces en direction longitudinale, ces pièces sont piquées après leur estampage et sont cousues ensemble pour donner la bande de couche de couverture (3).

6. Volant (1) avec une couronne de volant, qui comprend une armature de volant (5) avec une couche de mousse (6) rapportée, qui est entourée par une couche de couverture constituée en cuir ou en matière plastique, en particulier produit selon un procédé d'après l'une au moins des revendications 1 à 5,
**caractérisé en ce que** la couche de couverture est constituée par une bande (3) susceptible d'être positionnée au moyen d'un appareil sur la couche de mousse (6), dont les extrémités (12, 13) sont séparées l'une de l'autre avant sa fixation sur la couche de mousse (6), **en ce que** la couche de mousse (6) comporte, pour la fixation des deux extrémités (12, 13) de la bande de couche de couverture (3), une rainure (10) s'étendant transversalement à la couronne de volant (5, 6), et **en ce qu'**il est prévu au moins un clip à effet ressort (11) dans la rainure (10) pour la fixation des deux extrémités (12, 13) de la bande de couche des couverture (3).

7. Volant selon la revendication 6, **caractérisé en ce que** le clip (11) est en acier-ressort.
